**Europäisches Patentamt**

**European Patent Office**

**Office européen des brevets**

(19)

(11) **EP 1 480 400 A1**

(12) **EUROPEAN PATENT APPLICATION**

(43) Date of publication:
**24.11.2004 Bulletin 2004/48**

(51) Int Cl.7: **H04L 27/26**

(21) Application number: **03425323.7**

(22) Date of filing: **21.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Siemens Mobile Communications S.p.A.**
**20126 Milano (IT)**

(72) Inventors:
 • **Benvenuto, Nevio**
  **31021 Mogliano (IT)**

 • **Tosato, Filippo**
  **35031 Abano Terme (IT)**
 • **Colosimo, Aurelio Amedeo**
  **20126 Milano (IT)**
 • **Moretti, Lino**
  **20128 Milano (IT)**

(74) Representative: **Giustini, Delio**
 **Siemens Mobile Communications S.p.A,**
 **Palazzo Gorky**
 **Via Monfalcone, 1**
 **20092 Cinisello Balsamo (IT)**

(54) **A method of bit and power loading in OFDM communication systems with modulation and coding adaptation**

(57) In an OFDM system with modulation and coding adaptation, the carriers are allotted a respective plurality of transmission modes characterised each by a specific combination of a modulation format and a coding scheme and consequently by a specific combination of values of bit rate and power. To allocate to each carrier, for a given OFDM symbol to be transmitted, an optimum value of bit rate and power resulting in the maximum bit rate for a given power or in a minimum power for a given bit rate, all carriers are initially allotted the mode characterised by the highest bit rate or power. If the constraints on the power (or respectively the bit rate) are not met, an iterative mode reduction is performed, the mode reduction at each iteration step being performed on the carrier for which said transition has a minimum cost.

FIG. 2

EP 1 480 400 A1

**Description**

<u>Field of the invention</u>

The present invention refers to multicarrier communication systems, and more particularly it concerns a method of bit rate and power allocation to the carriers of one such system for transmission of each modulated symbol, and a system employing the method.

The invention finds its preferred application in OFDM communication systems, and the following description will mainly refer to such preferred application.

<u>Background of the Invention</u>

Multicarrier communication systems are systems in which the band of a transmission channel is divided into a plurality of sub-carriers that are substantially independent and free of intersymbol interference (ISI). Symbols in the different sub-carriers are transmitted with suitable amplitude and/or phase modulation and suitable coding.

One kind of multicarrier system is Orthogonal Frequency Division Multiplexing (OFDM), in which the frequency spacing between adjacent sub-carriers is chosen so as to make correlation between signals transmitted on the different sub-carriers null. An OFDM system allows using overlapping sub-carriers, so that efficient spectrum exploitation is achieved.

Use of such systems has been proposed for high-speed data communication systems over both wired and wireless transmission media. For instance, in the wireless environment, a wireless local area network (W-LAN) using OFDM in its physical layer is being standardised by the European Telecommunications Standard Institute (ETSI). This network is known as HIPERLAN/2 and is disclosed in ETSI DTS/BRAN-0023003: "HIPERLAN Type 2 Technical Specification; Physical (PHY) Layer", November 1999. As known, in contrast with 3rd generation cellular system, which support high mobility and data rates up to some Mbit/s (e.g. 2 Mbit/s in UMTS), W-LANs offer much higher data rates (exceeding 50 Mbit/s) in a smaller range for stationary and portable devices with limited mobility.

In an OFDM (or generally in a multicarrier) system, the problem arises of allocating bit rate and power to the different sub-carriers so as to maximise the overall bit rate for each symbol without exceeding a given power budget or, conversely, of distributing an assigned overall bit rate among the sub-carriers so as to minimise the required transmission power.

Several proposals to this end are known in the art. Yet some of them are computationally efficient but suboptimal, while other methods yield optimal allocation but are slow to converge and/or have a high computational cost.

An exemplary optimal method is known as the Hughes-Hartog algorithm and is disclosed in EP 0 224 556 B. That algorithm starts by assigning no power and no bits to each sub-carrier. Then one bit or a fixed number of bits are given to the sub-carrier requiring the least amount of power to increase its data rate. The process is iterated until the power budget is exhausted. The Hughes-Hartog algorithm requires an intensive amount of sorting and converges very slowly in practical OFDM scenarios.

Another optimal method, known as the Krongold, Ramachandran and Jones (KRJ) algorithm, is disclosed in US 6 400 773 B. This method exploits Lagrangian multiplicators to solve a constrained-maximum problem, where the function to maximise is the bit rate and the constraint is the budget power. The KRJ algorithm is cheaper to implement than the Hughes-Hartog algorithm, but it is actually optimal only if the allotted number of information bits is a convex function of the signal-to-noise ratio. Yet, this situation occurs usually when a single channel code and standard signal constellations (e.g. QAM, Quadrature Amplitude Modulation) are used. When different coding schemes and/or different modulation sizes are used, this may not be true and, under such conditions, the KRJ algorithm becomes sub-optimal.

<u>Object of the Invention</u>

Thus, the invention aims at providing a bit and power loading method that, while being computationally efficient, are optimal also when the coding and modulation lead to a non-convex bit-rate versus power curve, as it may happen when an adaptive coding and an adaptive modulation are used.

Use of adaptive modulation in OFDM systems is well known. For instance EP 1 187 413 A discloses a loading algorithm in which different modulation sizes can be used for different blocks of sub-carriers.

<u>Summary of the Invention</u>

In a first aspect, the invention generally concerns a method of allocating transmission parameters (namely, bit rate and power) to individual carriers of a multicarrier communication system, preferably an OFDM system, so as to determine, for each symbol to be transmitted, an optimum overall value of a first of said transmission parameters while meeting predetermined constraints for an overall value of a second parameter. In case of a system providing for an adaptive coding and modulation, the method comprises the steps of:

a) determining, for all carriers, a respective plurality of transmission modes characterised each by a specific combination of a modulation format and a coding scheme and consequently by a specific combination of values of said first and second parameters;

b) determining, for all carriers, transition costs associated with a transition from one mode to a lower one characterised by lower values of said parameters, a transition cost being representative of a decrease in the first parameter as a function of the decrease in the second parameter;

c) allotting to each carrier a respective first transmission mode associated with a maximum value of said transmission parameters;

d) evaluating the overall value of said second parameter;

e) if the overall value of the second parameter meets the constraints, using said respective first transmission mode for all carriers;

f) if the overall value of the second parameter does not meet the constraints, changing the mode allotted to one of the carriers to a lower mode, the carrier and the target mode selected for such change being those for which said change results in a minimum transition cost,

g) evaluating the overall second parameter after the mode change at step f); and

h) possibly iterating steps f) and g) until the second parameter meets the constraints.

According to a second aspect of the invention there is also provided a multicarrier communication system comprising, at a transmitting end, means for coding and modulating a sequence of digital signals so as to obtain a sequence of symbols that are each transmitted by using a plurality of suitably spaced carriers. The coding and modulating means are associated with a control unit, which adapts the coding and modulation laws and allocates bit rate and transmit power to the individual carriers by using the method of the invention.

Brief description of the drawings

The invention will be better understood from the following description of a preferred embodiment, given by way of non-limiting example, with reference to the accompanying drawings, in which:

-   Fig. 1 is a schematic block diagram of an OFDM communication system employing the invention;
-   Fig. 2 is a general flow chart of a first embodiment of the method of the invention;
-   Figs. 3A and 3B together are a more detailed flow chart of the method of the invention;
-   Figs. 4 and 5 are diagrams illustrating a simplified example the method of the invention; and
-   Fig. 6 is a general flow chart of a second embodiment of the method of the invention.

Description of the preferred embodiments

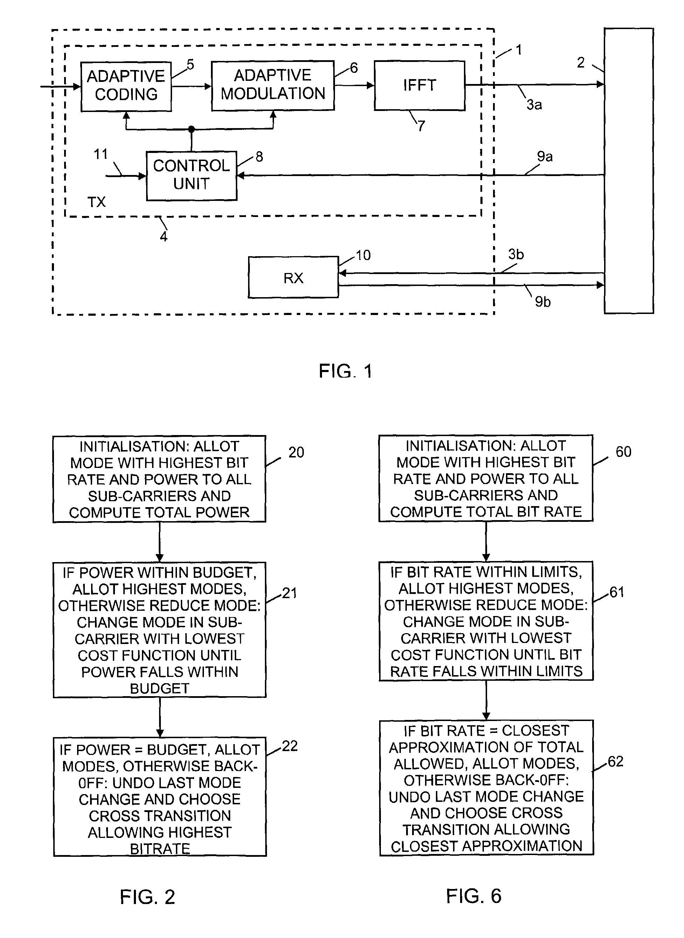

As shown in Fig. 1, an OFDM communication system employing the invention comprises a pair of identical transceivers 1 and 2 which exchange data through data lines 3a (from transceiver 1 to transceiver 2) and 3b (from transceiver 2 to transceiver 1). As shown in greater detail for transceiver 1, transmitter 4 includes: a coder 5 which receives a flow of information bits from a data source, not shown; a modulator 6 which receives the coded bits from coder 5 and provides symbols having phase and quadrature components (i. e. symbols of the kind I+jQ); a unit 7 computing an IFFT (Inverse Fast Fourier Transform) of the symbols generated by modulator 6 and transmitting the transformed symbols over data line 3a as a plurality of sub-carriers having the frequency spacing required by OFDM.

According to the invention, both the coding law and the modulation law are adaptive and can be different for each sub-carrier. A control unit 8 determines the most suitable coding and modulation laws and, consequently, determines the manner in which the available bit rate and power are to be shared among the different sub-carriers. To this end, control unit 8 receives from the remote transceiver 2, through a signalling line 9a, information about the channel conditions and, from upper layers of the system (arrow 11), information about the minimum bit rate and maximum power utilisable. Control unit 8 performs the bit and power allocation algorithm according to the invention.

A receiver 10 in transceiver 1 will receive OFDM symbols from transceiver 2 through data line 3b and will provide the remote transmitter, through a signalling line 9b, with channel information allowing a remote control unit to determine the most appropriate coding and modulation laws and performs the bit rate and power allocation for the signals to be transmitted over line 3b.

The theoretical principles of the algorithm will now be disclosed. Without loss of generality, we assume that no inter-symbol interference (ISI) nor intercarrier interference (ICI) exists between the N sub-carriers of the OFDM system, so that the communication channel can be decomposed into an equivalent set of N additive white Gaussian noise (AWGN) parallel channels.

Moreover, we assume that the number of information bits (modulation size) as well as the channel coding scheme and the allotted power can be adapted for each sub-carrier. We will thus use the term "transmission mode" to indicate the combination of a given channel coding scheme and modulation format for a sub-carrier.

Let b[m] and $b_c$[m] be the number of information bits and coded bits per OFDM symbol, respectively, on sub-carrier $m$, with $m$ =1,...,$N$ . Hence, the code rate on sub-carrier $m$ is $R_c$[m]=b[m]/$b_c$[m]. We observe that while $b_c$[m] determines the modulation type by assigning the number of coded bits carried by each modulation symbol, $R_c$[m] determines the coding scheme. Last, let $P[m]$ be the transmit power on sub-carrier $m$ and P = [$P[1],P[2],...,P[N]$] the vector of allocated powers. The overall number of information bits conveyed by an OFDM symbol is given by

$$b = \sum_{m=1}^{N} b[m] = \sum_{m=1}^{N} R_c[m] b_c[m] . \qquad (1)$$

and the total power is

We indicate the set of available transmission modes as $M$ = {0, 1...K} . Each mode is

$$P = \sum_{m=1}^{N} P[m] . \qquad (2)$$

identified by a couple of numbers $(b_k, b_{c,k}), k \in M$, where $b_k \in B = \{b_0 = 0, b_1,...,b_k\}$ and $b_{c,k} \in B_c = \{b_{c,0} = 0, b_{c,1},..., b_{c,K}\}$, indicating the available number of information bits per sub-carrier use and the number of coded bits per sub-carrier use, respectively. Hence, the code rate of mode $k \in M$ is $R_{c,k} = b_k / b_{c,k}$ . In general, the first mode for $k = 0$ corresponds to no transmission and we set $R_{c,0} = 1$. Moreover, set B is ordered such that $b_{l+1} \geq b_l$ .

We denote with **M** = [M[1]... M[1]] an $N$-uple of selected modes.

If $P_e$[m] is the bit error probability of sub-carrier $m$, we assume that a target error probability $P_{e,ref}$ must be met in each sub-carrier, which probability is usually the same for all sub-carriers. I.e. it must be $P_{e[m]} \leq P_{e,ref}$, $m = 1...N$.

Optimal bit and power allocation requires solving either of two maximisation problems, namely:

1) *Throughput maximisation.* Given a fixed amount of power $P_{tot}$ , the objective is to find the $N$-uples **M** and **P** that fulfil

$$\begin{cases} \max_{M \in M^N, P} b \\ P = P_{tot} \\ P_e[m] \leq P_{e,ref} , \forall m \end{cases} \qquad (3)$$

2) *Margin maximisation.* Given a fixed throughput $b_{tot}$, the objective is to find the $N$-uples **M** and **P** that fulfil

$$\begin{cases} \min_{M \in M^N, P} P \\ b = b_{tot} \\ P_e[m] \leq P_{e,ref} , \forall m \end{cases} \qquad (4)$$

As known, "margin" (or better "performance margin") is the amount of noise the system can tolerate while still operating under the bit error probability constraints: minimising power, as indicated by (4), actually corresponds to maximising margin.

With regard to sub-carrier $m$, we denote with $G[m]$ its gain and with $\sigma_W^2$ the noise

$$\tilde{\Gamma}[m] = \frac{G[m]^2}{\sigma_W^2} . \qquad (5)$$

power, which we assume to be the same for all sub-carriers; then we define the normalised signal-to-noise ratio for a transmit power equal to one, as

Thus, for a transmit power $P[m]$, the signal-to-noise ratio is readily given by

$$\Gamma(m) = P[m] \cdot \tilde{\Gamma}[m] \qquad (6)$$

We will consider in greater detail the throughput maximisation problem. The considerations made for this problem can be repeated substantially unchanged for the margin maximisation problem, once the roles of the bit rate and power are exchanged.

*A. Throughput Maximisation Algorithm*

The constraint on the error probability is such that each transmission mode corresponds to an operating point in the $b[m]$ - $\Gamma[m]$ plane. We indicate with $\Gamma_k$, $k \in M$, ($\Gamma_0 = 0$) the signal-to-noise ratio required to transmit in an AWGN channel with a bit error probability $P_{e,ref}$, using mode $k$. We now introduce various metrics associated to the generic sub-carrier m. Firstly, for a given transmission mode k, the minimum power level which guarantees the target bit error probability is given by

$$P_k[m] = \frac{\Gamma_k}{\tilde{\Gamma}[m]} \quad , \quad k \in M . \qquad (7)$$

We also define the bit-per-power cost function corresponding to the transition from mode $k$ to mode $h$:

$$\mathcal{F}_{kh}[m] \triangleq \frac{b_k - b_h}{P_k[m] - P_h[m]} \quad , \quad k, h \in M , k > h . \qquad (8)$$

For a given mode $k$, we evaluate the mode $x_k[m]$, lower than $k$, which yields the lowest cost function. In other words, given mode $k$, $h = x_k[m]$ denotes the mode that yields the smallest information bit reduction $(b_k - b_h)$ for a corresponding power reduction $P_k[m] - P_h[m]$. I. e., in a plane (b, P), segment k - h is the lowest slope

$$x_k[m] = \begin{cases} \arg\min\limits_{h<k} \mathcal{F}_{kh}[m] , & k \neq 0 \\ 0 , & k = 0 \end{cases} . \qquad (10)$$

segment among those connecting node k to any lower node h.

Let

$$\mathcal{F}_k[m] = \begin{cases} \min_{h < k} \mathcal{F}_{kh}[m] , & k \neq 0 \\ \infty , & k = 0 \end{cases} , \qquad (9)$$

then

Moreover, for each sub-carrier $m$, let M[$m$] represent the current allotted mode, X[$m$] the next optimum lower mode and F[$m$] the cost function associated to mode transition $M[m] \rightarrow X[m]$ .

The basic idea of the algorithm is as follows. Reference is made also to Fig. 2. First, we allocate the mode with the highest number of information bits to all sub-carriers, i.e. we set $M[m] = K$ (step 20 in Fig. 2). This gives the maximum total number of bits $b = N \cdot b_k$. Correspondingly, the initial power allocation is $P[m] = P_k [m]$, for $m =1,..., N$ . For sub-carrier $m$, we also select the next optimum cost function F[$m$] = $F_K[m]$ with corresponding mode X[$m$] = $x_K [m]$.

For a given power allocation, we then evaluate the total power $P$. If the power constraint in (3) is not met, we change the mode in the sub-carrier with the lowest cost function, i.e. set

$$\bar{m} = \arg \min_m F[m] . \qquad (11)$$

it is

$$M[\bar{m}] = X[\bar{m}] . \qquad (12)$$

We then update metrics of sub-carrier $\bar{m}$.

Steps (11) - (14), which correspond to step 21 in Fig. 2, are repeated until $P \leq P_{tot}$.

It is easy to show that the "mode reduction" operation (12) is optimum in the sense

$$P[\bar{m}] = \mathrm{P}_{M[m]}[\bar{m}] \quad , \quad b[\bar{m}] = \mathrm{b}_{M[m]} \qquad (13)$$

$$F[\bar{m}] = \mathcal{F}_{M[m]}[\bar{m}] \quad , \quad X[\bar{m}] = x_{M[m]}[\bar{m}] . \qquad (14)$$

that, taking the total number of information bits and overall power *after reduction* as reference, we cannot transmit more information bits with the same amount of power or, equivalently, we cannot transmit the same number of information bits with a lower amount of power. In fact, the algorithm reduces the number of information bits by removing one mode at a time, discarding the modes with the "most expensive" bits, i.e. those bits that require the greatest amount of power to be transmitted.

We observe that the algorithm works by "mode removal" rather than "bit removal".

We note that this procedure is optimal for either throughput or margin maximisation. The only difference between the two problems is the constraint that must be fulfilled (a power constraint in throughput maximisation, a bit rate constraint in margin maximisation), which leads to a different stopping rule of the mode reduction operation. Taking this into account, the appended claim 1 and the claims depending thereon will generally refer to maximisation of a first transmission parameter while meting certain constraints for a second transmission parameter.

In the particular case the number of information bits $b_k$ of mode $k$ is a convex function of $\Gamma_k$ *(convex case),* i. e. the operating points in the $b_k$ - $\Gamma_k$ plane belong to a convex hull, metric (9) becomes

$$F_k[m] = \begin{cases} F_{k(k-1)}[m], & k \neq 0 \\ \infty, & k = 0 \end{cases} \qquad (15)$$

and relation (10) simplifies into

$$r_k[m] = \begin{cases} k-1, & k \neq 0 \\ 0, & k = 0 \end{cases} \qquad (16)$$

This means that the transitions are always between one mode to next lower one.

We recall that usually $b_k$ is a convex function of $\Gamma_k$ only when a single channel code is used and the transmission modes employ a standard signal constellation (e.g. QAM), whereas this may not be true when different coding schemes and/or different modulation sizes are used.

At the end of the mode reduction procedure, if the total allotted power is below the budget, i.e. $P < P_{tot}$, and $b < Nb_k$, then the choice (11) may be no longer optimal because, for some sub-carriers, there could be another transition that removes fewer bits and still meets the power constraint, although requiring more power than the previous selected mode. Hence, these transitions that keep the power below the budget $P_{tot}$ (hereafter named "cross transitions") do not satisfy (9). On the contrary, from the above discussion, all transitions that keep the power above the budget satisfy (9). As a consequence, at the end of the procedure, we have to compare all possible cross-transitions associated to the sub-carriers and choose the one that yields the greatest total number of bits $b$ (step 22 in Fig. 2).

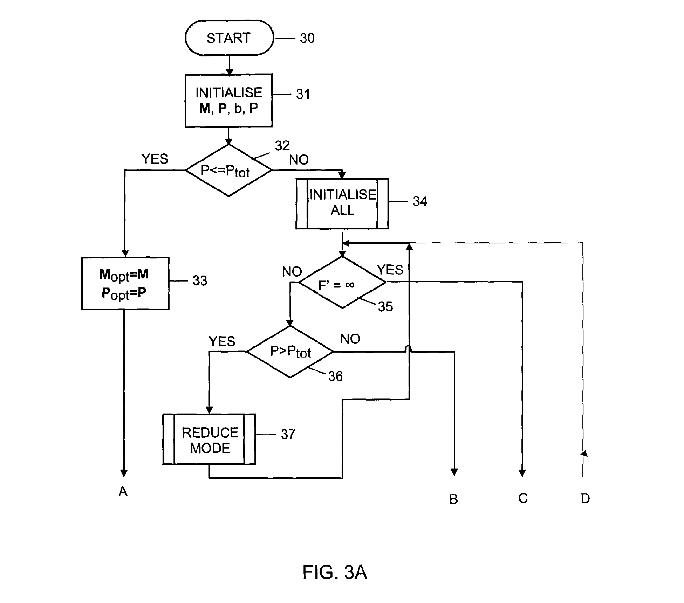

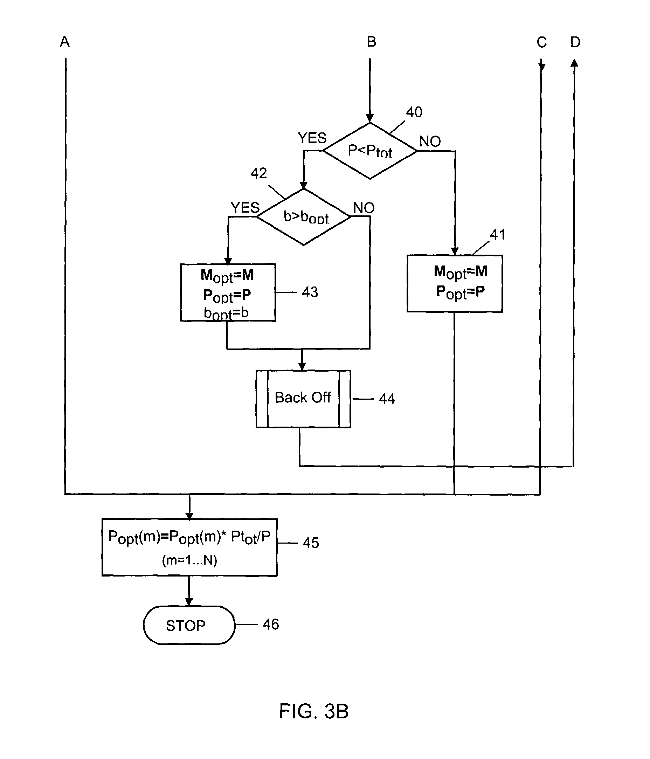

Overall, the throughput maximisation algorithm has the following steps, where $\mathbf{M}_{opt}$ is the optimum mode allocation, with corresponding number of bits $b_{opt}$. Reference is made also to Figs. 3A and 3B.

1) Initialise M= $[K,...,K]$, P = $[P_k[1],...,P_k[N]]$, b = $Nb_k$, P = $\sum_{m=1}^{N} P_k[m]$ (Step 31, Fig. 3A)

    If $P \leq P_{tot}$ (Output Yes from Step 32, Fig. 3A) then $\mathbf{M}_{opt}$ = **M** and $b_{opt}$ = b (Step 33, Fig. 3A). *Stop*

    *Else (P > $P_{tot}$) : set* $b_{opt}$ = 0 and initialise F[m] = $F_K[m]$ and X[m] = $x_k[m]$, for m =1,..., N (Step 34).

2) *If P > $P_{tot}$* (Output YES from Step 36):

    If F[m] = ∞, for m = 1,...,N, (Output YES from Step 35), then *stop.*

    *Else :*

- **Reduce mode** according to (11) - (14) (Step 37) and compute total number of information bits $b$ and total power P.
- Go *to step* 2), i. e. return to Step 35, fig. 3A.

    *Else (P ≤ $P_{tot}$)* (Output NO from Step 36, Fig. 3A)

    If P = $P_{tot}$ (Output NO from Step 40, Fig. 3B), then $\mathbf{M}_{opt}$ = **M** and $b_{opt}$ = b. (Step 41, Fig. 3B). *Stop*

    *Else (P < $P_{tot}$)* (Output YES from Step 40, Fig. 3B)

- *if b > $b_{opt}$* (Output YES from Step 42, Fig. 3B), then $\boldsymbol{M}_{opt}$ = **M** and $b_{opt}$ = b.
- **Back-off** (Step 44, fig. 3B): undo the mode reduction in the last selected sub-carrier $\overline{m}$. Let $M[\overline{m}]$ and $X[\overline{m}]$ be the new metrics (with corresponding $P > P_{tot}$).

    *If $X[\overline{m}] < M[\overline{m}]$-1* (i.e. there are still modes to be visited), select the next mode, not yet explored, with a higher number of information bits than any previously selected modes, and with the lowest cost function among the remaining modes. Set $x[\overline{m}]$ to this mode and $F[\overline{m}] = F_{M[\overline{m}]X[\overline{m}]}[\overline{m}]$

    *Else (X $[\overline{m}]$ = $M[\overline{m}]$ -1)* (i.e. there are no more modes available), then set $X[\overline{m}] = M[\overline{m}]$ -1 and $F[\overline{m}]$ = ∞.

- Go *to step* 2 (i. e. return to Step 35, fig. 3A.).

Note that before the back-off operation, $M_{opt}$ is updated only if the last mode reduction yields a number of bits b higher than any previous allocation.

Typically, the algorithm stops when F[m] = ∞, for m = 1,...,N.

If desired, and as disclosed at step 45 in fig. 3B, the allocated powers can be normalised such that the total transmit power is equal to the budget $P_{tot}$.

In practically carrying out the invention, some measures allow reducing complexity.

First, instead of pre-computing and storing cost functions (8), we can save computational effort and memory locations by calculating and storing in a matrix c (see example of Table I) the following normalised cost functions, that are independent of sub-carrier index $m$

$$ F'_{kh} = \frac{b_k}{\Gamma_k} - \frac{b_h}{\Gamma_h} \quad , \quad k = 1, \ldots, K \ . \ h = 0, \ldots, K - 1 \ , \ k > h. \tag{17} $$

In the convex case, for each mode k, we need to store only value $F'_{k(k-1)}$; otherwise, in general, we have to store values corresponding to $h = 0, \ldots, k - 1$, which are sorted in increasing order. However, for each mode $k$, after sorting, we can discard transitions that lead to a mode with a lower number of information bits than any previous transition, because these transitions will never be visited in the back-off operation. Using (7), we can calculate the cost functions (8) from (17) by a simple multiplication

$$ F_{kh}[m] = F'_{kh} \tilde{\Gamma}[m] \ . \tag{18} $$

Moreover, we note that $X_K[M]$ in (10) depends only on $F'$ and not on $\tilde{\Gamma}[M]$. This can be easily seen by substituting (18) into (10).

Actually, along with matrix $C$, we can build up a matrix $X$ (see example of Table II), which for each mode $k$ stores the "arrival modes" indicated by the corresponding matrix $C$. In particular, in the convex case, only one value is stored per row, namely $X[k,1] = k-1$, $k=1,\ldots,K$.

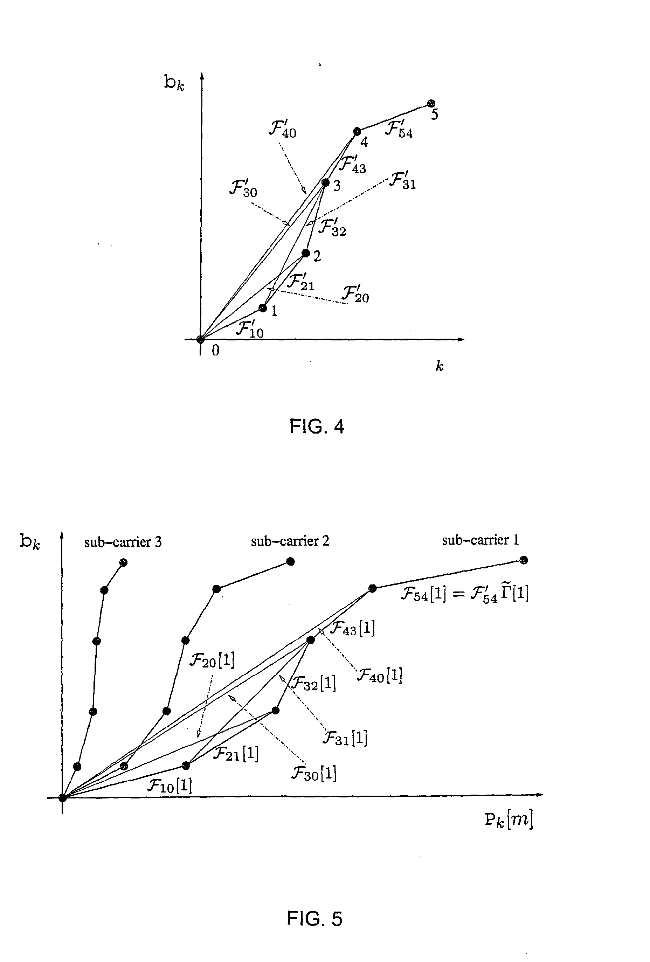

As an example, Figs. 4 and 5 show functions $b_k$ versus $\Gamma_k$ and $b_k$ versus $P_k(m)$, respectively, for a system of three sub-carriers, sorted in increasing order of $\tilde{\Gamma}$, and five modes. The transitions of interest for the method are shown in Fig. 4 and for one carrier in Fig. 5. Tables and II show how to build the matrix of normalised cost functions and the matrix of arrival modes, respectively, and hence how to trace Figs. 4 and 5.

The Figures clearly show transitions (the "cross-transitions" mentioned above) that have higher costs $F'$ and yet entail a lower bit rate reduction than a lower cost transition. Such transitions are considered in the back-off operation. For example, from mode k = 4 we can go to mode 0 or, with higher cost, to mode 3. A transition to mode 2 would also be theoretically possible, yet it would result in a higher cost and a lower number of information bits than transition to mode 2, so that it will never be selected in the back-off operation. Values corresponding to transitions that will never be visited by the algorithm have been omitted in Tables I and II.

Note also that, in a situation like that depicted in Figs. 4, 5, the KRJ algorithm would never take into account modes 2 and 1, which are out of the convex-hull approximation of the curves $b_k$ - $\Gamma_k$ and $b_k$ - $P_k(m)$ and therefore the allocation cannot be optimal.

TABLE I

MATRIX C OF NORMALIZED COST FUNCTIONS

| Mode 1 | $F'_{10}$ | – | – |
|---|---|---|---|
| Mode 2 | $F'_{20}$ | $F'_{21}$ | – |
| Mode 3 | $F'_{30}$ | $F'_{31}$ | $F'_{32}$ |
| Mode 4 | $F'_{40}$ | $F'_{43}$ | – |
| Mode 5 | $F'_{54}$ | – | – |

TABLE II

MATRIX X OF ARRIVAL MODES

| Mode 1 | 0 | – | – |
|---|---|---|---|
| Mode 2 | 0 | 1 | – |
| Mode 3 | 0 | 1 | 2 |
| Mode 4 | 0 | 3 | – |
| Mode 5 | 4 | – | – |

Additional saving in computation can be achieved by ordering the $N$ sub-carriers such that the normalised signal-to-noise ratios

$$\left| \tilde{\Gamma}[1]...\tilde{\Gamma}[N] \right|$$

are in increasing order. Moreover, we define a new metric vector, $\mathbf{F'} = [F'[1]...F'[N]]$, which contains for each sub-carrier $m$ the normalised cost function $F'$.

For each entry of matrix $C$, of value $F'_{kh}$, we define a list containing all sub-carrier indexes whose normalised cost function is $F'_{kh}$; in other words, this list points out all entries of $\mathbf{F'}$ whose value is $F'_{kh}$. Let $L$ be the number of non-zero entries in matrix $C$. We introduce lists $\mathbf{g}^{(1)}...\mathbf{g}^{(L)}$, where the superscript $l$ ($l = 1...L$) enumerates the entries in $C$ in columnwise order. Hereafter the correspondence between $F'_{kh}$ and $l$ will be denoted by $l = s(F'_{kh})$. For example, with regard to Table I, at a given step of the loading algorithm, $\mathbf{g}^{(1)}$ will contain the sub-carrier indexes whose associated cost is $F'_{10}$, $\mathbf{g}^{(2)}$ those with associated cost $F'_{20}$, and so on up to $\mathbf{g}^{(L)}$ which contains the sub-carrier indexes whose associated cost is $F'_{32}$. We assume also that the elements of each list, $\mathbf{g}^{(l)}$, are sorted in increasing order. Hence, because the normalised signal-to-noise ratios $\tilde{\Gamma}[m]$, $m = 1,...,N$, are in increasing order, the first entry, $\mathbf{g}^{(l)}[1]$, denotes the sub-carrier with the smallest cost function $F_{kh}$ within list $\mathbf{g}^{(l)}$.

We also introduce a vector, $\mathbf{F}^{min}$, of $L$ elements, containing the smallest cost functions $F$ for each of the $L$ lists. In the example,

$$\mathbf{F}^{min} = \left[ F'_{10}\tilde{\Gamma}[g^{(1)}[1]], F'_{20}\tilde{\Gamma}[g^{(2)}[1]], \ldots, F'_{32}\tilde{\Gamma}[g^{(L)}[1]] \right].$$

If a list is empty, the corresponding elements in $\mathbf{F}^{min}$ is set to $\infty$.

We can now simplify the evaluation of (11). Let

$$\bar{l} = \arg\min_{l} \mathbf{F}^{min}[l], \qquad (19)$$

it is

$$\bar{m} = g^{(l)}[1]. \qquad (20)$$

A step-by-step description of the algorithm is given in Table III, where we assume that the normalised signal-to-noise ratios

$$[\tilde{\Gamma}[1],...,\tilde{\Gamma}[N]]$$

are sorted in increasing order. We also denote with pop($\mathbf{g}^{(l)}$) the operation of extracting the value from the top of list $\mathbf{g}^{(l)}$, pop($\mathbf{g}^{(l)};m$) the operation of extracting the element of value m from $\mathbf{g}^{(l)}$, and push($\mathbf{g}^{(l)};m$) the operation of inserting, in increasing order, the element of value $m$ into $\mathbf{g}^{(l)}$. In Table III the vector $\mathbf{J} = [J[1],...,J[n]]$ contains indexes.

TABLE III

THROUGHPUT MAXIMISATION ALGORITHM

1) Initialize $\mathbf{M} = [K, \ldots, K]$, $\mathbf{P} = [\mathrm{P}_K[1], \ldots, \mathrm{P}_K[N]]$, $b = N\mathrm{b}_K$, $P = \sum_{m=1}^{N} \mathrm{P}_K[m]$.

    *If* $P \leq P_{tot}$, *then* $\mathbf{M}_{opt} = \mathbf{M}$ *and* $\mathbf{P}_{opt} = \mathbf{P}$. *Go to step 3.*

    *Else :* set $b_{opt} = 0$, build matrixes $\mathcal{C}$ and $\mathcal{X}$, initialize vectors $\mathbf{J} = [1, \ldots, 1]$, $\mathbf{F}' = [\mathcal{C}[K, j[1]], \ldots, \mathcal{C}[K, j[N]]]$,

    $\mathbf{X} = [\mathcal{X}[K, j[1]], \ldots, \mathcal{X}[K, j[N]]]$, $\mathbf{g}^{(K)} = [1, \ldots, N]$ and $\mathbf{F}^{min} = \left[ \mathrm{F}'[1] \, \widetilde{\Gamma}[1], \infty, \ldots, \infty \right]$.

2) *While* $\mathbf{F}' \neq \infty$

    *If* $P > P_{tot}$

        ○ **Reduce mode :**

$$\bar{i} = \arg \min_{i \in \{1, \ldots, L\}} \mathrm{F}^{min}[i]$$

$$\bar{m} = \mathbf{g}^{(\bar{i})}[1] \quad , \quad \mathrm{pop}(\mathbf{g}^{(\bar{i})}) \quad , \quad \mathrm{F}^{min}[\bar{i}] = \mathrm{F}'[\mathbf{g}^{(\bar{i})}[1]] \, \widetilde{\Gamma}[\mathbf{g}^{(\bar{i})}[1]]$$

$$\mathrm{M}_{old} = \mathrm{M}[\bar{m}] \quad , \quad \mathrm{M}[\bar{m}] = \mathrm{X}[\bar{m}] \quad , \quad P[\bar{m}] = \mathrm{P}_{\mathrm{M}[\bar{m}]}[\bar{m}] \quad , \quad b[\bar{m}] = \mathrm{b}_{\mathrm{M}[\bar{m}]}$$

$$P_{old} = P \quad , \quad b_{old} = b$$

$$P = P_{old} - \mathrm{P}_{\mathrm{M}_{old}}[\bar{m}] + \mathrm{P}_{\mathrm{M}[\bar{m}]}[\bar{m}] \quad , \quad b = b_{old} - \mathrm{b}_{\mathrm{M}_{old}} + \mathrm{b}_{\mathrm{M}[\bar{m}]}$$

$$j_{old} = j[\bar{m}] \quad , \quad j[\bar{m}] = 1$$

$$\mathrm{F}'[\bar{m}] = \begin{cases} \mathcal{C}[\mathrm{M}[\bar{m}], j[\bar{m}]], & \mathrm{M}[\bar{m}] \neq 0 \\ \infty, & \mathrm{M}[\bar{m}] = 0 \end{cases} \quad , \quad \mathrm{X}[\bar{m}] = \begin{cases} \mathcal{X}[\mathrm{M}[\bar{m}], j[\bar{m}]], & \mathrm{M}[\bar{m}] \neq 0 \\ 0, & \mathrm{M}[\bar{m}] = 0 \end{cases}$$

$$\bar{l} = s(\mathrm{F}'[\bar{m}]) \quad , \quad \mathrm{push}(\mathbf{g}^{(\bar{l})}, \bar{m}) \quad , \quad if \, \mathbf{g}_1^{(\bar{l})} = \bar{m} \, then \, \mathrm{F}_{old}^{min} = \mathrm{F}^{min}[\bar{l}] \, and \, \mathrm{F}^{min}[\bar{l}] = \mathrm{F}'[\bar{m}] \, \widetilde{\Gamma}[\bar{m}]$$

---

    *Else if* $P < P_{tot}$

        ○ *If* $b > b_{opt}$, *then* $\mathbf{M}_{opt} = \mathbf{M}$, $\mathbf{P}_{opt} = \mathbf{P}$ *and* $b_{opt} = b$.

        ○ **Back-off :**

$$\mathrm{M}_{new} = \mathrm{M}[\bar{m}] \quad , \quad \mathrm{M}[\bar{m}] = \mathrm{M}_{old} \quad , \quad P[\bar{m}] = \mathrm{P}_{\mathrm{M}[\bar{m}]}[\bar{m}] \quad , \quad b[\bar{m}] = \mathrm{b}_{\mathrm{M}[\bar{m}]}$$

$$P = P_{old} \quad , \quad b = b_{old}$$

$$if \, \mathbf{g}^{(\bar{l})}[1] = \bar{m} \, then \, \mathrm{F}^{min}[\bar{l}] = \mathrm{F}_{old}^{min}$$

$$\mathrm{pop}(\mathbf{g}^{(\bar{l})}, \bar{m}) \quad , \quad j[\bar{m}] = j_{old} + 1$$

$$\mathrm{F}'[\bar{m}] = \begin{cases} \mathcal{C}[\mathrm{M}[\bar{m}], j[\bar{m}]], & \mathrm{M}_{old} - \mathrm{M}_{new} \neq 1 \\ \infty, & \mathrm{M}_{old} - \mathrm{M}_{new} = 1 \end{cases} \quad , \quad \mathrm{X}[\bar{m}] = \begin{cases} \mathcal{X}[\mathrm{M}[\bar{m}], j[\bar{m}]], & \mathrm{M}_{old} - \mathrm{M}_{new} \neq 1 \\ \mathrm{M}_{new}, & \mathrm{M}_{old} - \mathrm{M}_{new} = 1 \end{cases}$$

$$\bar{l} = s(\mathrm{F}'[\bar{m}]) \quad , \quad \mathrm{push}(\mathbf{g}^{(\bar{l})}, \bar{m}) \quad , \quad if \, \mathbf{g}^{(\bar{l})}[1] = \bar{m} \, then \, \mathrm{F}^{min}[\bar{l}] = \mathrm{F}'[\bar{m}] \, \widetilde{\Gamma}[\bar{m}]$$

    *Else* $(P = P_{tot})$ : $\mathbf{M}_{opt} = \mathbf{M}$ *and* $\mathbf{P}_{opt} = \mathbf{P}$. *Go to step 3.*

    *End While*

3) **Normalize power :** $P_{opt}[m] = P_{opt}[m] \cdot \frac{P_{tot}}{P}$, $m = 1, \ldots, N$.

Point 3 is the power normalisation discussed above.

Two possible simplifications can be applied to the algorithm to further reduce complexity:

1) <u>Convex case approximation</u>: We can discard the modes that do not belong to the convex hull in the $b$-$\Gamma$ plane. In this case only one transition from each mode to the next lower one is visited by the algorithm. This approximation may lead to significant computational saving with usually negligible loss in throughput.

2) <u>No back-off</u>: We can skip the back-off operation and terminate the algorithm as soon as $P$ becomes lower than the budget $P_{tot}$. Although the resulting allocation is no longer optimal, negligible throughput loss is expected as, usually, the back-off process may change the assigned mode in only a few sub-carriers.

An evaluation of the complexity of the proposed algorithm shows that such complexity is substantially comparable with that of the KRJ algorithm, when applied in the conditions leading to an optimum solution also for the latter algorithm. We however point out still once that the present invention leads to an optimum solution also when the curve $b(\Gamma)$ is not convex, whereas under such conditions the KRJ algorithm is only sub-optimum.

*B. Margin Maximisation*

We now consider the margin maximisation problem given by relation (4). Reference is made also to Fig. 6. As in the case of throughput maximisation, we start with allocating the maximum number of information bits and the maximum power to all sub-carriers. As clearly shown in the flow chart, the procedure is similar to that disclosed above for throughput maximisation, except that the number of information bits instead of the power is evaluated at each step to start or to go on with the mode reduction or with back off, respectively. In this case, reducing the rate in the m-th sub-carrier, according to (11 )-(12), is optimum, provided that the corresponding total number of bits does not fall below the constraint $b_{tot}$. If the target number of information bits $b_{tot}$ is not reached exactly through mode-reduction operations, the algorithm goes into back-off mode as in throughput maximisation and stops when b is the closest lower approximation of $b_{tot}$. Indeed, it is to be appreciated that bit rate b is a discrete number, whereas power P considered in the throughput maximisation is a real (analogue) value.

The algorithm code is reported here

1) Initialise $\mathbf{M}$ = [K,...,K], $\mathbf{P}$= [$P_k$ [1],..., $P_k$ [N]], b = $Nb_K$, P = $\sum_{m=1}^{N} P_k[m]$

   If $b \leq b_{tot}$, then $\mathbf{M}_{opt}$ = $\mathbf{M}$ and $P_{opt}$ = P. Stop

   Else ($b > b_{tot}$): set $P_{opt}$ = 0 and initialise $F[m] = F_K[m]$ and $X[m] = x_k [m]$, for m=1,...,N.

2) If $b > b_{tot}$

   If $F[m] = \infty$, for m =1,..., N , then *Stop*.

   Else :

   • **Reduce mode** according to (11) - (14) (Step 37) and compute total number of information bits *b* and total power P.
   • Go to step 2.

   Else ($b \leq b_{tot}$)

   If $b = b_{tot}$, then $\mathbf{M}_{opt}$ = $\mathbf{M}$ and $P_{opt}$ = P. Stop

   Else ($b < b_{tot}$)

   • *if $P > P_{opt}$, then $\mathbf{M}_{opt}$ = $\mathbf{M}$ and $P_{opt}$ = P.*
   • **Back-off** (Step 44, fig. 3B): undo the mode reduction in the last selected sub-carrier $\overline{m}$. Let $M[\overline{m}]$ and $X[\overline{m}]$ be the new metrics (with corresponding $b > b_{tot}$).

   *If $X[\overline{m}] < M[\overline{m}]$ -1 (i.e. there are still modes to be visited), select the next mode, not yet explored, with a lower power than any previously selected modes, and with the lowest cost function among the remaining modes. Set $x[\overline{m}]$ to this mode and $F[\overline{m}] = F_{M[\overline{m}]X[\overline{m}]}[\overline{m}]$*

   *Else ($X[\overline{m}] = M[\overline{m}]$ -1) (i.e. there are no more modes available), then set $X[\overline{m}] = M[\overline{m}]$-1 and $F[\overline{m}] = \infty$.*

   • Go *to step 2.*

The skilled in the art will appreciate that the above disclosure is given by way of illustration only and has no limiting purpose, the scope of the invention being defined by the annexed claims.

**Claims**

1.   A method of allocating transmission parameters to individual carriers of a multicarrier communication system for each coded and modulated symbol to be transmitted, the method determining an optimum overall value of a first of said transmission parameters while meeting predetermined constraints for an overall value of a second parameter, the carriers being adaptively modulated, **characterised in that**, for a system providing also for an adaptive coding, the method comprises the steps of:

a) determining, for all carriers, a respective plurality of transmission modes characterised each by a specific combination of a modulation format and a coding scheme and consequently by a specific combination of values of said first and second parameters;

b) determining, for all carriers, transition costs associated with a transition from one mode to a lower one **characterised by** lower values of said parameters, a transition cost being representative of a decrease in the first parameter as a function of the decrease in the second parameter;

c) allotting to each carrier a respective first transmission mode associated with a maximum value of said transmission parameters;

d) evaluating the overall value of said second parameter;

e) if the overall value of the second parameter meets the constraints, using said respective first transmission mode for all carriers;

f) if the overall value of the second parameter does not meet the constraints, changing the mode allotted to one of the carriers to a lower mode, the carrier and the target mode selected for such change being those for which said change results in a minimum transition cost;

g) evaluating the overall second parameter after the mode change at step d);

h) possibly iterating steps f) and g) until the second parameter meets the constraints.

2. A method as claimed in claim 1, **characterised in that** the carriers are allotted the values of the first and second parameters associated to the modes resulting at the end of the iterations.

3. A method as claimed in claim 2, **characterised in that** the carriers are allotted the values of the first and second parameters associated to the modes resulting at the end of the iterations if the second parameter meets the constraints and has an overall value equal to a preset value.

4. A method as claimed in claim 3, **characterised in that**, if at the end of the iterations the second parameter meets the constraints and has an overall value better than a preset value, the method comprises the further steps of:

i) undoing the last mode change;

j) checking whether in any of the carriers there are mode changes associated with a higher transition costs but leading to a respective target mode associated with a better value of the first parameter;

k) in the affirmative, returning to step f);

l) in the negative, using the transmission modes determined at step h).

5. A method as claimed in any preceding claim, **characterised in that** the cost function of the mode transitions are determined as the product of a carrier-independent normalised cost function, calculated as the ratio between the variation in the first parameter occurring because of said transition and a corresponding variation of the signal-to-noise ratio required for transmission according to said modes, and a carrier-dependent signal-to-noise ratio normalised for a unit transmission power.

6. A method according to claim 5, **characterised in that** the normalised transition costs are pre-stored in a first matrix, discarding transitions which would result in allocation of a worst value of said first parameter than attained by a lower cost transition.

7. A method according to claim 6, **characterised in that** the target modes of the transitions stored in said first matrix are stored in a second matrix, and, by using said first and second matrices, for each value normalised cost function a list is created of the indexes of the sub-carriers having said value of the normalised cost function.

8. A method of bit rate and power allocation to individual carriers of an OFDM communication system, each carrier conveying coded and modulated signals and modulation being an adaptive modulation, the method determining a maximum value for a total bit rate attainable for a budget power, **characterised in that**, for a system providing also for an adaptive coding, the method comprises the steps of:

a1) determining, for all carriers, a respective plurality of transmission modes characterised each by a specific combination of a modulation format and a coding scheme and consequently by a specific combination of values of bit rate and transmit power;

b1) determining, for all carriers, bit-per-power transition costs associated with transitions from each mode to a lower one **characterised by** a lower bit rate and a lower power;

c1) allotting to each carrier a respective first transmission mode associated with a maximum value of information bits and a maximum power;

d1) evaluating the total transmit power required by said first transmission modes;

e1) if the total transmit power does not exceed a budget power, allotting said maximum number of information bits to all carriers;

f1) if the total transmit power exceeds a budget power, changing the mode allotted to one of the carriers from said first mode to a lower mode, the carrier and the target mode selected for such change being those for which said change involves the minimum bit-per-power transition cost;

g1) evaluating and the total number of information bits and the total transmit power after the mode change at step f1);

h1) iterating steps f1) and g1) until attaining a total transmit power not exceeding the budget power.

9. A method as claimed in claim 8, **characterised in that** the carriers are allotted the bit rates and powers determined at the end of the iterations.

10. A method as claimed in claim 8, **characterised in that** the carriers are allotted the bit rates and powers determined at the end of the iterations if the total power is equal to the budget power.

11. A method as claimed in claims 8 and 10, **characterised in that**, if the total power at the end of the iterations is lower than the budget power, the method comprises the further steps of:

i1) undoing the last mode change;

j1) checking whether in any of the carriers there are mode changes associated with higher transition costs but leading to a respective target mode associated with a higher bit rate;

k1) in the affirmative, returning to step f1);

l1) in the negative, using the transmission modes determined at step h1).

12. A method according to any of claims 8 to 11, **characterised in that** the optimum power determined for each carrier at the end of the iterations is normalised relative to the budget power, whereby transmission of a symbol takes place with said budget power.

13. A method of bit rate and power allocation to individual carriers of a multicarrier communication system, each carrier conveying coded and modulated signals and modulation being an adaptive modulation, the method determining, for a given total bit rate, a minimum transmit power and hence a maximum operating margin, **characterised in that**, for a system providing also for an adaptive coding, the method comprises the steps of:

a2) determining, for all carriers, a respective plurality of transmission modes characterised each by a specific combination of a modulation format and a coding scheme and consequently by a specific combination of values of bit rate and transmit power;

b2) determining, for all carriers, bit-per-power transition costs associated with transitions from each mode to a lower one **characterised by** a lower power and a lower bit rate;

c2) allotting to each carrier a respective first transmission mode associated with a maximum bit rate and a maximum power;

d2) evaluating the total bit rate required by said first transmission modes;

e2) if the total bit rate does not exceed the given bit rate, allotting said maximum bit rates and powers to all carriers;

f2) if the total bit rate exceeds the given bit rate, changing the mode allotted to one of the carriers from said first mode to a lower mode, the carrier and the target mode selected for such change being those for which said change involves the minimum transition cost;

g2) evaluating the total bit rate and the total transmit power after the mode change at step f2);

h2) iterating steps f2) and g2) until obtaining a total bit rate not exceeding the given bit rate.

14. A method as claimed in claim 13, **characterised in that** the carriers are allotted the bit rates and powers determined at the end of the iterations.

**15.** A method as claimed in claim 13, **characterised in that** the carriers are allotted the bit rates and powers determined at the end of the iterations if the total bit rate is equal to or is the closest approximation of the given bit rate.

**16.** A method as claimed in claims 8 and 10, **characterised in that**, if the total bit rate at the end of the iterations is lower than the given bit rate or a closest approximation of the given bit rate, the method comprises the further steps of:

i2) undoing the last mode change;
j2) checking whether in any of the carriers there are mode changes associated with higher transition costs but leading to a respective target mode associated with a higher bit rates;
k2) in the affirmative, returning to step f2);
l2) in the negative, using the transmission modes determined at step h2).

**17.** A multicarrier communication system comprising, at a transmitting end, means (5, 6) for coding and modulating a sequence of digital signals so as to obtain a sequence of symbols that are fed to means (7) for transmitting each symbol by using a plurality of suitably spaced carriers, the coding, modulating and transmitting means (5, 6, 7) being associated with a control unit (8) allocating transmission parameters to the individual carriers so as to determine an optimum overall value of a first of said transmission parameters while meeting predetermined constraints for an overall value of a second parameter, **characterised in that** said control unit (8) is arranged to allocate said parameters by using the method according to any of claims 1 to 7.

**18.** A communication system according to claim 17, wherein said carriers are orthogonally frequency division multiplexed carriers, and the control unit (8) allots bit rate and power to the carriers by using the method according to any of claims 8 to 16.

ADAPTIVE CODING `5` → ADAPTIVE MODULATION `6` → IFFT `7`

`1`

`2`

`3a`

CONTROL UNIT `8`

`11`

TX

`4`

`9a`

RX `10`

`3b`

`9b`

**FIG. 1**

INITIALISATION: ALLOT MODE WITH HIGHEST BIT RATE AND POWER TO ALL SUB-CARRIERS AND COMPUTE TOTAL POWER `20`

IF POWER WITHIN BUDGET, ALLOT HIGHEST MODES, OTHERWISE REDUCE MODE: CHANGE MODE IN SUB-CARRIER WITH LOWEST COST FUNCTION UNTIL POWER FALLS WITHIN BUDGET `21`

IF POWER = BUDGET, ALLOT MODES, OTHERWISE BACK-OFF: UNDO LAST MODE CHANGE AND CHOOSE CROSS TRANSITION ALLOWING HIGHEST BITRATE `22`

**FIG. 2**

INITIALISATION: ALLOT MODE WITH HIGHEST BIT RATE AND POWER TO ALL SUB-CARRIERS AND COMPUTE TOTAL BIT RATE `60`

IF BIT RATE WITHIN LIMITS, ALLOT HIGHEST MODES, OTHERWISE REDUCE MODE: CHANGE MODE IN SUB-CARRIER WITH LOWEST COST FUNCTION UNTIL BIT RATE FALLS WITHIN LIMITS `61`

IF BIT RATE = CLOSEST APPROXIMATION OF TOTAL ALLOWED, ALLOT MODES, OTHERWISE BACK-OFF: UNDO LAST MODE CHANGE AND CHOOSE CROSS TRANSITION ALLOWING CLOSEST APPROXIMATION `62`

**FIG. 6**

START — 30

INITIALISE
**M**, **P**, b, P — 31

32

YES
P<=P$_{tot}$
NO

INITIALISE
ALL — 34

M$_{opt}$=**M**
P$_{opt}$=**P** — 33

NO
F' = ∞
YES

35

YES
P>P$_{tot}$
NO

36

REDUCE
MODE — 37

A

B    C    D

FIG. 3A

A          B          C   D

YES    $P<P_{tot}$    NO    40

YES    $b>b_{opt}$    NO    42

| $M_{opt}=M$ |
| $P_{opt}=P$ |
| $b_{opt}=b$ |
— 43

| $M_{opt}=M$ |
| $P_{opt}=P$ |
— 41

Back Off  — 44

$P_{opt}(m)=P_{opt}(m)* Pt_{ot}/P$

$(m=1...N)$  — 45

STOP  — 46

FIG. 3B

FIG. 4

FIG. 5

**European Patent Office**

**EUROPEAN SEARCH REPORT**

Application Number

EP 03 42 5323

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/044597 A1 (SONALKAR RANJAN V ET AL) 18 April 2002 (2002-04-18)<br>* paragraph [0012] *<br>* paragraph [0055] - paragraph [0058] *<br>--- | 1-18 | H04L27/26 |
| X | WO 02 060142 A (BANDSPEED INC) 1 August 2002 (2002-08-01)<br>* page 3, last paragraph - page 4, line 5 *<br>* page 6, last paragraph *<br>* page 7, last paragraph - page 8, line 4 *<br>* page 9, last paragraph - page 10, line 2 *<br>--- | 1-18 | |
| A | US 2002/044610 A1 (JONES DAVID) 18 April 2002 (2002-04-18)<br>* paragraph [0128] *<br>* paragraph [0131] *<br>----- | 1-18 | |
| | | | **TECHNICAL FIELDS SEARCHED (Int.Cl.7)**<br>H04L |

The present search report has been drawn up for all claims

| Place of search | Date of completion of the search | Examiner |
|---|---|---|
| THE HAGUE | 8 October 2003 | Orozco Roura, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 42 5323

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2003

| Patent document cited in search report | | Publication date | Patent family member(s) | | Publication date |
|---|---|---|---|---|---|
| US 2002044597 | A1 | 18-04-2002 | US | 6285708 B1 | 04-09-2001 |
| | | | US | 6144696 A | 07-11-2000 |
| WO 02060142 | A | 01-08-2002 | WO | 02060142 A2 | 01-08-2002 |
| | | | US | 2002126766 A1 | 12-09-2002 |
| US 2002044610 | A1 | 18-04-2002 | US | 6310909 B1 | 30-10-2001 |
| | | | AU | 2196600 A | 31-07-2000 |
| | | | EP | 1142249 A1 | 10-10-2001 |
| | | | WO | 0039977 A1 | 06-07-2000 |